# EUROPEAN PATENT APPLICATION

(11) **EP 2 738 595 A1**
(43) Date of publication of application: **04.06.2014**
(21) Application number: 12877082.3
(22) Date of filing: 07.11.2012
(51) Int. Cl.: G02F 1/133, G06F 3/044

(54) **EMBEDDED CAPACITIVE TOUCH PANEL, DISPLAY, AND MANUFACTURING METHOD**

(30) Priority: 19.09.2012 CN 201210350298
(71) Applicant: Shanghai Tianma Micro-Electronics Co., Ltd., 201201 Shanghai (CN)
(72) Inventor: ZHOU, Xingyao, Shanghai 201201 (CN); YAO, Qijun, Shanghai 201201 (CN)
(74) Representative: Ahner, Philippe
(86) International application number: PCT/CN2012/084252
(87) International publication number: WO 2014/043982

(57) **Abstract**

The present invention discloses an In-Cell capacitive touch panel, a display device and a method for manufacturing the In-Cell capacitive touch panel. The transmittance uniformity is improved and the slots are hidden by arranging the slots of the transparent conductive layer above the light-impermeable regions of the black matrix and/or below the color resistors of the same color, thereby avoiding the display of the pattern of the slots and improving the display effect.

## Description

### Technical Field

The present invention relates to the field of touch display technologies, in particular to an In-Cell capacitive touch panel, a display device and a method for manufacturing the In-Cell capacitive touch panel.

### Technical Background

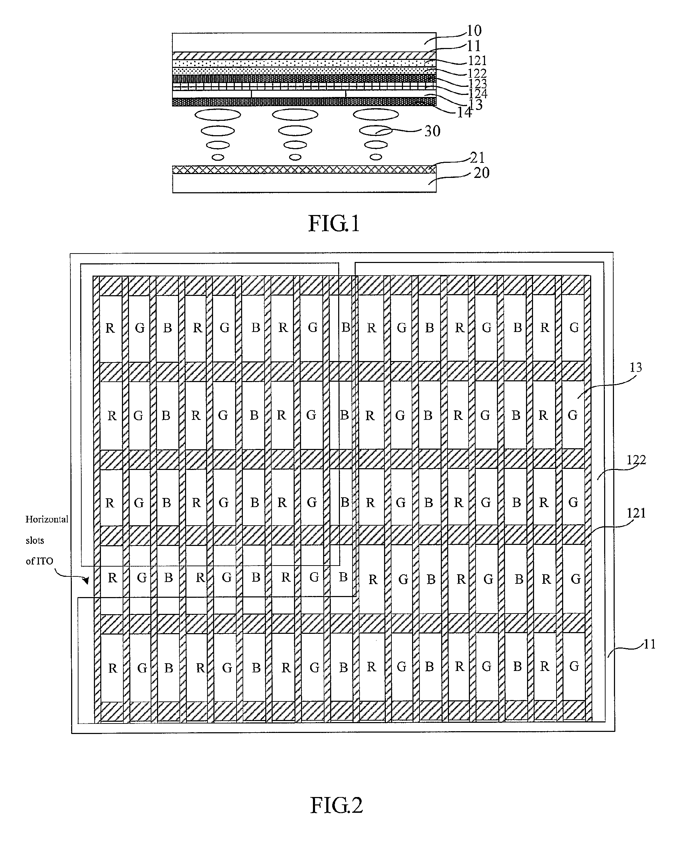

A touch screen built in a Liquid Crystal Display (LCD) device can be integrated with a color filter substrate (CF substrate) together to reduce a thickness of an entire display device and simplify the manufacturing process of the display device effectively, and hence is pursued greatly by manufacturers. As shown in Figures 1 and 2, an In-Cell touch panel includes a color filter substrate (CF substrate) 10, a black matrix 11, a touch layer 12 (which includes a metal grid 121, a transparent conductive layer 122, a first insulation layer 123 and a metal bridge 124), color resistors (R, G, B) 13 , a second insulation layer 14, a Thin Film Transistor substrate (TFT substrate) 20, a circuit electrode 21 on the TFT substrate 20, and a liquid crystal layer 30. A plurality of light-permeable regions are provided on the black matrix (BM) 11 located on the CF substrate 10. Driving lines and sensing lines provided on the touch layer 12 are arranged to intersect with each other, and a touch signal is generated when intersections between the driving lines and the sensing lines are touched by the finger of a user. The color resistors 13 located on the touch layer 12 cover the light-permeable regions of the black matrix 11, and the second insulation layer 14 is located on the color resistors 13.

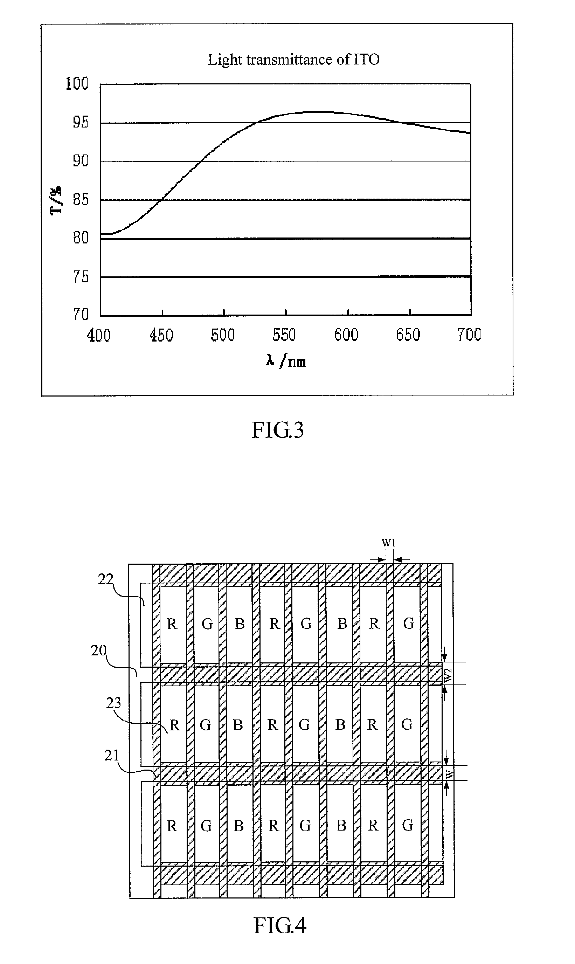

As shown in Figure 2, the driving lines and touching lines of the touch layer are constituted by the metal grid 121 and the transparent conductive layer 122 in the structure of the In-Cell touch panel described above, where the metal grid 121 is designed to be invisibly shielded by the black matrix, but slots of the pattern of the transparent conductive layer 122 may be visible by a person's eyes because such slots are arranged at a region in which a pixel is present (i.e. the light-permeable region). There exists a difference in transmittance of light penetrating regions with and without the transparent conductive layer 122, and such difference may be observed by the person's eyes. Since the light transmittances vary with light wavelengths (as shown in Figure 3), the obviousness degrees of the slots of the transparent conductive layer 122 observed in the case of R, G and B pictures are different from each other.

### Summary of the Invention

An object of the present invention is to provide an In-Cell capacitive touch panel, a display device and a method for manufacturing the In-Cell capacitive touch panel, where the slots of the transparent conductive are arranged at suitable positions for hiding, thereby improving the display effect.

In order to solve the technical problems described above, the present invention provides an In-Cell capacitive touch panel, including: a substrate; and a black matrix, a transparent conductive layer and color resistors sequentially formed on the substrate. The black matrix is provided with a plurality of light-permeable regions, and the color resistors cover the light-permeable regions of the black matrix according to a certain arrangement rule, where slots of the transparent conductive layer are arranged above light-impermeable regions of the black matrix and /or below the color resistors of the same color.

Preferably, the arrangement rule is that an R color resistor, a G color resistor and a B color resistor are sequentially arranged in a horizontal direction, and the color resistors of the same color are arranged in a vertical direction.

Preferably, a line width of the light-impermeable region of the black matrix in the vertical direction ranges from 7.0µm to 8.0µm.

Preferably, a line width of the light-impermeable region of the black matrix in the horizontal direction ranges from 24.5µm to 26.5µm. Preferably, horizontal slots of the transparent conductive layer are arranged above the light-impermeable regions of the black matrix, and vertical slots of the transparent conductive layer are arranged below the color resistors of the same color.

Preferably, a line width of the horizontal slot of the transparent conductive layer is 10% to 90% of the line width of the light-impermeable region of the black matrix in the horizontal direction. Preferably, the line width of the horizontal slot of the transparent conductive layer ranges from 3µm to 22µm.

Preferably, the line width of the vertical slot of the transparent conductive layer ranges from the size of a pixel subtracted by the width of the light-impermeable region of the black matrix in the vertical direction to the size of the pixel plus the line width of the light-impermeable region of the black matrix in the vertical direction.

Preferably, the line width of the vertical slot of the transparent conductive layer ranges from 33.5µm to 38.5µm.

Preferably, the In-Cell capacitive touch panel further includes a metal grid arranged between the black matrix and the transparent conductive layer.

Preferably, In-Cell capacitive touch panel further includes a first insulation layer and a metal bridge arranged between the transparent conductive layer and the color resistor.

Preferably, In-Cell capacitive touch panel further includes a second insulation layer and a photolithography spacer sequentially formed on the color resistor.

Preferably, the transparent conductive layer is made of Indium Tin Oxide (ITO), Indium Zinc Oxide (IZO), Carbon Nano-Tube (CNT) or Al-Ti co-doped zinc oxide.

Correspondingly, there is provided an In-Cell capacitive touch display device, including the In-Cell capacitive touch panel described above.

Correspondingly, there is provided a method for manufacturing the In-Cell capacitive touch panel described above, including:
preparing a substrate; and
sequentially forming a black matrix, a transparent conductive layer and color resistors on the substrate, where the black matrix is provided with a plurality of light-permeable regions, the color resistors cover the light-permeable regions of the black matrix according to a certain arrangement rule, and slots of the transparent conductive layer are arranged above the light-impermeable regions of the black matrix and/or below the color resistors of the same color.

In the In-Cell capacitive touch panel, the display device and the method for manufacturing the In-Cell capacitive touch panel provided in the present invention, the light transmittance uniformity is improved in that the slots of the transparent conductive layer are hidden above the light-impermeable regions of the black matrix and/or below the color resistors of the same color, thereby avoiding the display of the pattern of the slots and improving the display effect, with comparison with the prior art.

### Description of Drawings

Figure 1 is a schematic view showing the sectional structure of an In-Cell capacitive touch display device in the prior art;
Figure 2 is a schematic view of an In-Cell capacitive touch panel with a transparent conductive layer formed by ITO in the prior art;
Figure 3 is a graph showing light transmittance versus light wavelengths with respect to a transparent conductive layer formed by ITO in the prior art;
Figure 4 is a schematic view of an In-Cell capacitive touch panel according to a first embodiment of the present invention;
Figure 5 is a schematic view of an In-Cell capacitive touch panel according to a second embodiment of the present invention;
Figure 6 is a schematic view of an In-Cell capacitive touch panel according to a third embodiment of the present invention; and
Figure 7 is a schematic view of an In-Cell capacitive touch panel according to a fourth embodiment of the present invention.

### Detailed description of the Preferred Embodiments

The embodiments of the present invention are further described in conjunction with the accompanying drawings so as to make the objects and characteristics of the present invention more apparent, but various variations may be made to the present invention and the invention is not intended to be limited to the present invention.

### A First Embodiment

As shown in Figure 4, the present embodiment provides an In-Cell capacitive touch panel, including: a substrate 20; and a black matrix 21, a transparent conductive layer 22 and color resistors 23 sequentially formed on the substrate 20, where the black matrix 21 is provided with a plurality of light-permeable regions, the color resistors 23 cover the light-permeable regions of the black matrix according to a certain arrangement rule, and slots of the transparent conductive layer 22 are arranged above light-impermeable regions of the black matrix.

In the present embodiment, there are three kinds of color resistors, in particular, red (R) color resistors, Green (G) color resistors and blue (B) color resistors. The R, G and B color resistors are arranged alternately in a row direction (i.e. a horizontal direction), and the color resistors of the same color such as R color resistors, G color resistors or B color resistors are arranged in a column direction (i.e. a vertical direction). The light-impermeable regions of the black matrix can be described as a horizontal black matrix and a vertical black matrix. Preferably, a line width of the vertical black matrix (i.e. a line width of the light-impermeable region of the black matrix in the vertical direction) ranges from 7.0µm to 8.0µm; and a line width of the horizontal black matrix (i.e. a line width of the light-impermeable region of the black matrix in the horizontal direction) ranges from 24.5µm to 26.5µm.

In the present embodiment, the transparent conductive layer 22 is made of Indium Tin Oxide (ITO), Indium Zinc Oxide (IZO), Carbon Nano-Tube (CNT) or Al-Ti co-doped zinc oxide, the slots of the transparent conductive layer 22 are arranged at the light-impermeable regions of the black matrix between two rows of color resistors, and a line width of the slot of the transparent conductive layer, i.e. the line width of the horizontal slot, can be designed to be 10% to 90% of the line width of the horizontal black matrix, or be ranged from 3µm to 22µm. In the transparent conductive layer 22 of the present embodiment, a plurality of horizontal conductive lines in parallel are formed by the horizontal slots as sensing lines of a touch screen.

Preferably, the In-Cell capacitive touch panel further includes: a metal grid arranged between the black matrix 21 and the transparent conductive layer 22 (not shown); a first insulation layer (not shown) and a metal bridge (not shown) arranged between the transparent conductive layer 22 and the color resistors 23, and a second insulation layer (not shown) and a photolithography spacer (not shown) sequentially formed on the color resistors 23.

The present embodiment further provides an In-Cell capacitive touch display device, including the In-Cell capacitive touch panel described above.

The present embodiment further provides a method for manufacturing the In-Cell capacitive touch panel described above, including:
preparing a substrate; and
sequentially forming a black matrix, a transparent conductive layer and color resistors on the substrate, where the black matrix is provided with a plurality of light-permeable regions, the color resistors cover the light-permeable regions of the black matrix according to a certain arrangement rule, and slots of the transparent conductive layer are horizontally arranged above the light-impermeable regions of the black matrix.

In the In-Cell capacitive touch panel, the In-Cell capacitive touch display device and the method for manufacturing the In-Cell capacitive touch panel as provided in the present embodiment, the non-uniformity of the light transmittance (which is caused when the slots of the transparent conductive layer are arranged at different light-permeable regions) is avoided in that the slots of the transparent conductive layer are hidden above the light-impermeable regions of the black matrix, thereby avoiding the display of the pattern of the slots and improving the display effect.

### A Second Embodiment

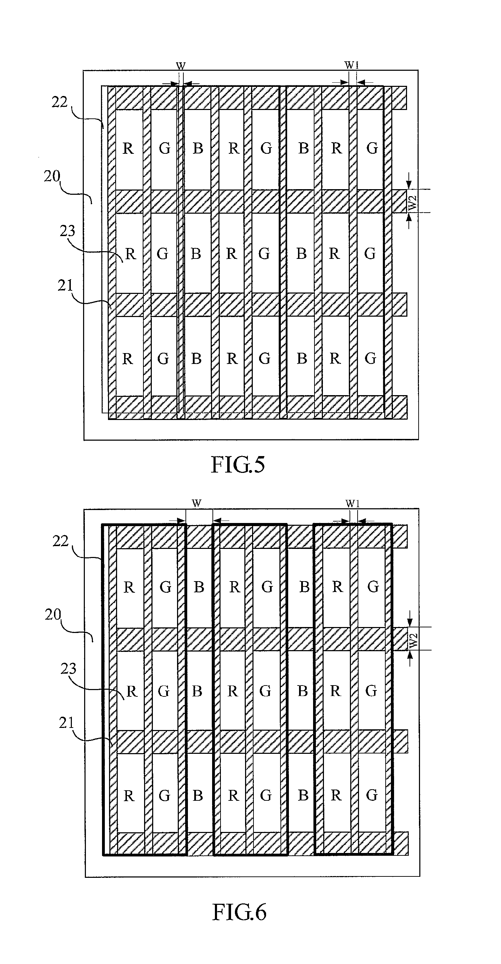

As shown in Figure 5, the present embodiment provides an In-Cell capacitive touch panel, including: a substrate 20; and a black matrix 21, a transparent conductive layer 22 and color resistors 23 sequentially formed on the substrate 20, where the black matrix 21 is provided with a plurality of light-permeable regions, the color resistors 23 cover the light-permeable regions of the black matrix according to a certain arrangement rule, and slots of the transparent conductive layer 22 are arranged above light-impermeable regions of the black matrix.

In the present embodiment, there are three kinds of color resistors, in particular R color resistors, G color resistors and B color resistors. The R, G and B color resistors are arranged alternately in a row direction (i.e. a horizontal direction), and the color resistors of the same color such as R color resistors, G color resistors or B color resistors are arranged in a column direction (i.e. a vertical direction).

The light-impermeable regions of the black matrix can be described as a horizontal black matrix and a vertical black matrix. Preferably, a line width of the vertical black matrix (i.e. a line width of the light-impermeable region of the black matrix in the vertical direction) ranges from 7.0µm to 8.0µm; and a line width of the horizontal black matrix (i.e. a line width of the light-impermeable region of the black matrix in the horizontal direction) ranges from 24.5µm to 26.5µm.

In the present embodiment, the transparent conductive layer 22 is made of Indium Tin Oxide (ITO), Indium Zinc Oxide (IZO), Carbon Nano-Tube (CNT) Al-Ti co-doped zinc oxide, the slots of the transparent conductive layer 22 are arranged at the light-impermeable regions of the black matrix between two columns of color resistors (i.e. arranged on the vertical black matrix), the line width of the slot of the transparent conductive layer, i.e. the line width of the vertical slot ranges from 2µm to 6µm. In the transparent conductive layer 22 of the present embodiment, a plurality of vertical conductive lines in parallel are formed by the vertical slots as driving lines of a touch screen.

Preferably, the In-Cell capacitive touch panel further includes: a metal grid arranged between the black matrix 21 and the transparent conductive layer 22; a first insulation layer and a metal bridge arranged between the transparent conductive layer 22 and the color resistors 23, and a second insulation layer and a photolithography spacer sequentially formed on the color resistors 23.

The present embodiment further provides an In-Cell capacitive touch display device, including the In-Cell capacitive touch panel described above.

The present embodiment further provides a method for manufacturing the In-Cell capacitive touch panel described above, including:
preparing a substrate; and
sequentially forming a black matrix, a transparent conductive layer and color resistors on the substrate, where the black matrix is provided with a plurality of light-permeable regions, the color resistors cover the light-permeable regions of the black matrix according to a certain arrangement rule, and the slots of the transparent conductive layer are vertically arranged above the light-impermeable regions of the black matrix.

In the In-Cell capacitive touch panel, the In-Cell capacitive touch display device and the method for manufacturing the In-Cell capacitive touch panel provided in the present embodiment, the non-uniformity of the light transmittance which is caused when the slots are arranged at different light-permeable regions is avoided in that the slots of the transparent conductive layer are hidden above the vertical light-impermeable regions of the black matrix, thereby avoiding the display of the pattern of the slots and improving the display effect. As compared with other embodiments, performances of the panel other than the display effect are less affected by arrangement of the slots due to the less distance between two adjacent color resistors in the horizontal direction, but it is more demanding for the manufacturing process accuracy.

### A Third Embodiment

As shown in Figure 6, the present embodiment provides an In-Cell capacitive touch panel, including: a substrate 20; and a black matrix 21, a transparent conductive layer 22 and color resistors 23 sequentially formed on the substrate 20, where the black matrix 21 is provided with a plurality of light-permeable regions, the color resistors 23 cover the light-permeable regions of the black matrix according to a certain arrangement rule, and slots of the transparent conductive layer 22 are arranged below the color resistors of the same color, that is, below the column of the color resistors of the same color.

In the present embodiment, there are three kinds of color resistors, in particular R color resistors, G color resistors and B color resistors. The R, G and B color resistors are arranged alternately in a row direction (i.e. a horizontal direction), and the color resistors of the same color such as R color resistors, G color resistors or B color resistors are arranged in a column direction (i.e. a vertical direction).

The light-impermeable regions of the black matrix can be described as a horizontal black matrix and a vertical black matrix. Preferably, a line width of the vertical black matrix (i.e. a line width of the light-impermeable region of the black matrix in the vertical direction) ranges from 7.0µm to 8.0µm; a line width of the horizontal black matrix (i.e. a line width of the light-impermeable region of the black matrix in the horizontal direction) ranges from 24.5µm to 26.5µm.

In the present embodiment, the transparent conductive layer 22 is made of Indium Tin Oxide (ITO), Indium Zinc Oxide (IZO), Carbon Nano-Tube (CNT) or Al-Ti co-doped zinc oxide, the slots of the transparent conductive layer 22 are arranged on the columns of the color resistors of the same color, the line width of the slot of the transparent conductive layer (e.g. the line width of the vertical slot), i.e. the width of the color resistor in the horizontal direction, ranges from the size of a pixel subtracted by the width of the light-impermeable region of the black matrix in the vertical direction to the size of the pixel plus the line width of the light-impermeable region of the black matrix in the vertical direction, for example, from 33.5µm to 38.5µm. In the transparent conductive layer 22 of the present embodiment, a plurality of vertical conductive lines in parallel are formed by the vertical slots as driving lines of a touch screen.

Preferably, the In-Cell capacitive touch panel further includes: a metal grid arranged between the black matrixes 21 and the transparent conductive layer 22, a first insulation layer and a metal bridge arranged between the transparent conductive layer 22 and the color resistors 23, and a second insulation layer and a photolithography spacer sequentially formed on the color resistors 23.

The present embodiment further provides an In-Cell capacitive touch display device, including the In-Cell capacitive touch panel described above.

The present embodiment further provides a method for manufacturing the In-Cell capacitive touch panel described above, including:
preparing a substrate; and
sequentially forming a black matrix, a transparent conductive layer and color resistors on the substrate, where the black matrix is provided with a plurality of light-permeable regions, the color resistors cover the light-permeable regions of the black matrix according to a certain arrangement rule, and the slots of the transparent conductive layer are vertically arranged below the color resistors of the same color.

In the In-Cell capacitive touch panel, the In-Cell capacitive touch display device and the method for manufacturing the In-Cell capacitive touch panel provided in the present embodiment, the problem of displaying the pattern of the slots caused by the non-uniformity of the light transmittance is avoided and the slots are hidden by arranging the slots of the transparent conductive layer below the color resistors of the same color, thereby improving the display effect.

### A Fourth Embodiment

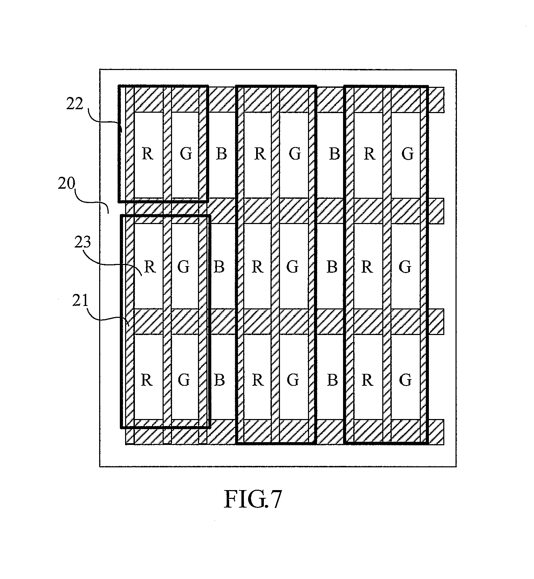

As shown in Figure 7, the present embodiment provides an In-Cell capacitive touch panel, including: a substrate 20; and a black matrix 21, a transparent conductive layer 22 and color resistors 23 sequentially formed on the substrate 20, where the black matrix 21 is provided with a plurality of light-permeable regions, the color resistors 23 cover the light-permeable regions of the black matrix according to a certain arrangement rule, and slots of the transparent conductive layer 22 are arranged above the light-impermeable regions and below the color resistors of the same color (i.e. below the columns of the color resistors of the same color) respectively according to the designed pattern of ITO.

In the present embodiment, there are three kinds of color resistors, in particular R color resistors, G color resistors and B color resistors. The R, G and B color resistors are arranged alternately in a row direction (i.e. a horizontal direction), and the color resistors of the same color such as R color resistors, G color resistors or B color resistors are arranged in a column direction (i.e. a vertical direction).

A line width of the vertical black matrix (i.e. a line width of light-impermeable region of the black matrix in the vertical direction) ranges from 7.0µm to 8.0µm; and a line width of the horizontal black matrix (i.e. a line width of light-impermeable region of the black matrix in the horizontal direction) ranges from 24.5µm to 26.5µm.

In the present embodiment, the transparent conductive layer 22 is made of Indium Tin Oxide (ITO), Indium Zinc Oxide (IZO), a Carbon Nano-Tube (CNT) or Al-Ti co-doped zinc oxide, and the slots of the transparent conductive layer 22 are arranged above the light-impermeable regions of the black matrix and on the columns of the color resistors of the same color, that is, the slots of the transparent conductive layer include horizontal slots and vertical slots, and the slots of the present embodiment may be essentially regarded as the combination of the slots in the first embodiment, the second embodiment and the third embodiment.

Preferably, the In-Cell capacitive touch panel further includes: a metal grid arranged between the black matrix 21 and the transparent conductive layer 22; a first insulation layer and a metal bridge arranged between the transparent conductive layer 22 and the color resistors 23; and a second insulation layer and a photolithography spacer sequentially formed on the color resistors 23.

The present embodiment further provides an In-Cell capacitive touch display device, including the In-Cell capacitive touch panel described above.

The present embodiment further provides a method for manufacturing the In-Cell capacitive touch panel described above, including:

preparing a substrate; and

sequentially forming a black matrix, a transparent conductive layer and color resistors on the substrate, where the black matrix is provided with a plurality of light-permeable regions, the color resistors cover the light-permeable regions of the black matrix according to a certain arrangement rule, and the slots of the transparent conductive layer are vertically arranged above the light-impermeable regions of the black matrix and below the color resistors of the same color.

In the In-Cell capacitive touch panel, the In-Cell capacitive touch display device and the method for manufacturing the In-Cell capacitive touch panel provided in the present embodiment, the problem of displaying the pattern of the slots caused by the non-uniformity of the light transmittance is avoided and the slots are hidden by arranging the slots of the transparent conductive layer above the light-impermeable regions of the black matrix and below the color resistors of the same color, thereby improving the display effect.

Obviously, various modifications and variations may be made by those skilled in the art without departing from the principle and scope of the invention. Thus, all these modifications and variations are intended to be included in this invention if they fall within the scope of the claims of the invention and their equivalents.

## Claims

1. An In-Cell capacitive touch panel, comprising:
a substrate; and a black matrix, a transparent conductive layer and color resistors sequentially formed on the substrate, wherein the black matrix is provided with a plurality of light-permeable regions, the color resistors cover the light-permeable regions of the black matrix according to a certain arrangement rule, and slots of the transparent conductive layer are arranged above light-impermeable regions of the black matrix and/or below the color resistors of the same color.

2. The In-Cell capacitive touch panel of claim 1, wherein, the arrangement rule is that R, G and B color resistors are alternatively arranged in a horizontal direction and the color resistors of the same color are arranged in a vertical direction.

3. The In-Cell capacitive touch panel of claim 2, wherein, a line width of the light-impermeable region of the black matrix in the vertical direction ranges from 7.0µm to 8.0µm.

4. The In-Cell capacitive touch panel of claim 3, wherein, a line width of the light-impermeable region of the black matrix in the horizontal direction ranges from 24.5µm to 26.5µm.

5. The In-Cell capacitive touch panel of claim 2, wherein, horizontal slots of the transparent conductive layer are arranged above the light-impermeable regions of the black matrix, and vertical slots of the transparent conductive layer are arranged below the color resistors of the same color.

6. The In-Cell capacitive touch panel according to any one of claims 2 to 5, wherein, a line width of the horizontal slot of the transparent conductive layer is 10% to 90% of the line width of the light-impermeable region of the black matrix in the horizontal direction.

7. The In-Cell capacitive touch panel according to any one of claims 2 to 5, wherein, the line width of the horizontal slot of the transparent conductive layer ranges from 3µm to 22µm.

8. The In-Cell capacitive touch panel according to any one of claims 2 to 5, wherein, the line width of the vertical slot of the transparent conductive layer ranges from the size of a pixel subtracted by the width of the light-impermeable region of the black matrix in the vertical direction to the size of the pixel plus the line width of the light-impermeable region of the black matrix in the vertical direction.

9. The In-Cell capacitive touch panel according to any one of claims 2 to 5, wherein, the line width of the vertical slot of the transparent conductive layer ranges from 33.5µm to 38.5µm.

10. The In-Cell capacitive touch panel of claim 1, further comprising a metal grid arranged between the black matrix and the transparent conductive layer.

11. The In-Cell capacitive touch panel of claim 1 or claim 10, further comprising a first insulation layer and a metal bridge arranged between the transparent conductive layer and the color resistors.

12. The In-Cell capacitive touch panel of claim 1, further comprising a second insulation layer and a photolithography spacer sequentially formed on the color resistors.

13. The In-Cell capacitive touch panel of claim 1, wherein, the transparent conductive layer is made of Indium Tin Oxide (ITO), Indium Zinc Oxide (IZO), Carbon Nano-Tube (CNT), or Al-Ti co-doped zinc oxide.

14. An In-Cell capacitive touch display device, comprising the In-Cell capacitive touch panel according to any one of claims 1 to 13.

15. A method for manufacturing the In-Cell capacitive touch panel according to any one of claims 1 to 13, comprising:
preparing a substrate; and
sequentially forming a black matrix, a transparent conductive layer and color resistors on the substrate, wherein the black matrix is provided with a plurality of light-permeable regions, the color resistors cover the light-permeable regions of the black matrix according to a certain arrangement rule, and slots of the transparent conductive layer are arranged above the light-impermeable regions of the black matrix and/or below the color resistors of the same color.
